# EUROPEAN PATENT APPLICATION

(11) **EP 1 925 642 A1**
(43) Date of publication of application: **28.05.2008**
(21) Application number: 06291840.4
(22) Date of filing: 27.11.2006
(51) Int. Cl.: C09B 29/32, C09B 45/18, C09B 45/22, C09B 69/04, C09B 67/22, G11B 7/24

(54) **3-hydroxy-cyclohex-2-enone based azo dyes, and their use with anionic azo metal complex dyes**

(71) Applicant: Clariant International Ltd., 4132 Muttenz 1 (CH)
(72) Inventor: Steffanut, Pascal, 68128 Village-Neuf (FR); Graciet, Jean-Christophe, 68128 Village-Neuf (FR); Lücke, Lars, 65719 Hofheim am Taunus (DE); Klein, Cédric, 67170 Brumath (FR); Winter, Martin, Alexander, 79400 Kandern (DE)

(57) **Abstract**

The present invention relates to the use of 3-hydroxy-cyclohex-2-enone azo based dyes and/or of azo metal complex dyes made thereof, and to compositions comprising 3-hydroxy-cyclohex-2-enone azo based dyes and anionic azo metal complex dyes with cationic basic yellow dyes in optical layers for optical data recording, preferably for optical data recording using a laser with a wavelength up to 450 nm.

The invention further relates to a write once read many (WORM) type optical data recording medium capable of recording and reproducing information with radiation of blue laser, which employs a 3-hydroxy-cyclohex-2-enone azo based dye and/or an azo metal complex dye made thereof, or a composition comprising a 3-hydroxy-cyclohex-2-enone azo based dye and a anionic azo metal complex dye with a cationic basic yellow dye in the optical layer.

## Description

The present invention relates to the use of 3-hydroxy-cyclohex-2-enone azo based dyes and/or of azo metal complex dyes made thereof, and to compositions comprising 3-hydroxy-cyclohex-2-enone azo based dyes and anionic azo metal complex dyes with cationic basic yellow dyes in optical layers for optical data recording, preferably for optical data recording using a laser with a wavelength up to 450 nm.

The invention further relates to a write once read many (WORM) type optical data recording medium capable of recording and reproducing information with radiation of blue laser, which employs a 3-hydroxy-cyclohex-2-enone azo based dye and/or an azo metal complex dye made thereof, or a composition comprising a 3-hydroxy-cyclohex-2-enone azo based dye and a anionic azo metal complex dye with a cationic basic yellow dye in the optical layer.

Recently, organic dyes have attracted considerable attentions in the field of diode-laser optical data storage. WORM type optical data recording media like commercial recordable compact discs (CD-R) and recordable digital versatile discs (DVD-R) can contain in the recording layer dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, enhancement of photosensitivity, low thermal conductivity as well as light and thermal stabilities, durability for storage or non-toxicity. Important criteria are also good read-out stability, which means high number of cycles at a given intensity of laser-light, and sufficient solubilities of the dyes in the organic solvents generally applied in the spin coating process.

At the recorded region of such an organic dye type optical data recording medium, the optical properties have been changed not only by a change in the optical characteristics and a decrease in the layer thickness resulting from the thermal decomposition of the dye, but also by a deformation of the substrate.

This recording principle is the same for CD-R and DVD-R, the difference remaining the spot size and the wavelength of the laser light used. CD-R are writable at a wavelength of from 770 to 830 nm and DVD-R, by using more recent compact high-performance red diode lasers, at a wavelength from 600 to 700 nm achieving then a 6- to 8 fold improvement in data packing density in comparison with conventional CDs.

However, considering factors such as the recent spread of electronic networks (e.g. Internet) and the emergence of high definition television (HDTV) broadcasting, inexpensive and convenient recording media, capable of recording image information at even larger capacity, are required. While DVD-R's sufficiently serve as high-capacity recording media at present, demand for larger capacity and higher density has increased.

Blu-ray^{®} discs (Blu-ray^{®} disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) or HD-DVD discs (a standard developed by Toshiba and NEC) are going to be the next milestone in optical data recording technology. By these new specifications the data storage may be increased up to 27 Gigabytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of such optical data recording media is known in the art. The optical recording medium comprises preferably a substrate with a guide groove for laser beam tracking, a recording layer, also called optical layer, containing an organic dye as the main component, a reflective layer and a protective layer. When recording/readout is carried out through the substrate, a transparent substrate is employed. As such a transparent substrate, one made of a resin such as polycarbonate, polymethacrylate or amorphous polyolefin, one made of glass or one having a resin layer made of radiation curable resin, i.e. photopolymerizable resin, formed on glass, may, for example, be employed. Advanced optical data recording media may comprise further layers, such as protective layers, adhesive layers or even additional optical recording layers.

For blue diode-laser optical data storage a variety of dye compounds has been proposed in the literature.

WO 2006/106110 A discloses anionic azo metal complex dyes with cationic basic yellow dyes as counterion.

CN 1562987 A discloses metal azo dyes based on thiazole moieties.

Unfortunately the dye compounds described so far still show disadvantages which impede their satisfactory use as dyes for optical data storage.

There is a still a need for an optical data recording medium that is capable of recording data at high density with improved recording characteristics and with improved read-out stabilities, also for the recording at speeds exceeding 1X, i.e. for 2X speed and 4X speed recording, therefore a need for an optical data recording medium with improved recording characteristics.

Surprisingly the object was achieved by using 3-hydroxy-cyclohex-2-enone azo based dyes and/or azo metal complex dyes made thereof, and by compositions comprising 3-hydroxy-cyclohex-2-enone azo based dyes as described below.

In the following text, "halogen" represents F, Cl, Br or I, preferably F, Cl or Br, more preferably F or Cl, even more preferably Cl, if not otherwise stated; "alkyl" represents linear and branched alkyl; and "alkoxy" represents linear and branched alkoxy; any alkyl and cycloalkyl groups being unsubstituted, partially or completely substituted by halogen; if not otherwise stated.

Subject of the invention is the use of a compound of formula (I), 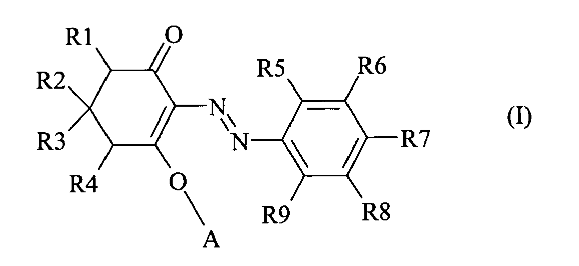 wherein
- A: represents H or a group of formula (II); 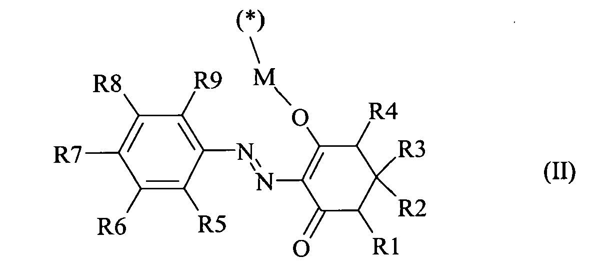
- M: represents a divalent metal atom, preferably selected from main groups 1, 2, 3, 4 or 5 or from transition groups 1 or 2 or 4, 5, 6, 7 or 8 of the Periodic Table of the Chemical Elements;(*) in formula (II) denotes the bond of the divalent metal atom M to the O atom in formula (I);R¹ and R⁴ are independently from each other selected from the group consisting of H, CN, CF₃, NO₂, SO₂-NR²³R²⁴ CO-R²¹, SO₂R²¹, CO-NR²³R²⁴;
- R² and R³: are independently from each other selected from the group consisting of H, C₁₋₁₀ alkyl, C₅₋₁₀ cycloalkyl and phenyl, the phenyl residue being unsubstituted or substituted by 1 to 4 substituents, the substituents being independently from each other selected from the group consisting of OH, halogen, CN, CF₃, NO₂ C₁₋₁₀ alkyl, C₅₋₁₀ cycloalkyl and C₁₋₁₀ alkoxy;
- R⁵, R⁶, R⁷, R⁸ and R⁹: are independently of from each other selected from the group consisting of H, OH, halogen, CN, NO₂ C₁₋₁₂ alkyl, C₆₋₁₀ aryl, NR²³R²⁴,
C₆₋₁₀ heteroaryl, the C₆₋₁₀heteroaryl residue having with 1, 2 or 3 heteroatoms independently from each other selected from the group consisting of O, N and S,
O-C₁₋₁₂ alkyl, S-C₁₋₁₂ alkyl, O-C₁₋₁₂ aryl, S-C₁₋₁₂ aryl, SO₂R²¹, SO₂-NR²³R²⁴, COR²¹ CO-NR²³R²⁴ and NHCOR²¹;
- R²¹: are independently from each other selected from the group consisting of OH, C₁₋₆ alkyl, C₆₋₁₀ aryl and O-C₁₋₆ alkyl;
- R²³ and R²⁴: are independently from each other selected from the group consisting of H, C₁₋₆ alkyl, C₆₋₁₀ aryl and C₁₋₁₂ alkyl- NR²³R²⁴;
with the proviso, that in case one or both of the ortho residues R5 and R9 is, or are independently from each other, O-C₁₋₁₂ alkyl and/or O-C₁₋₁₂ aryl, the para residue R7 is not simultaneously O-C₁₋₁₂ alkyl and/or O-C₁₋₁₂ aryl, and vice versa; in an optical layer, preferably in an optical layer for optical data recording.

Preferably,
- M: is a divalent metal atom selected from the group consisting of Mg, Ca, Sr, Ba, Mn, Cu, Ni, Co, Zn and Fe
- R¹ and R⁴: are independently from each other selected from the group consisting of H, CN, CF₃ and CO-R²¹;
- R² and R³: are independently from each other selected from the group consisting of H, C₁₋₄ alkyl and phenyl;
- R⁵, R⁶, R⁷ , R⁸ and R⁹: are independently of from each other selected from the group consisting of H, OH, F, Cl, Br, CN, NO₂, C₁₋₄ alkyl, phenyl, NR²³R²⁴, O-C₁₋₄ alkyl, O-phenyl, SO²R²¹, SO₂-NR²³ R²⁴, COR²¹ and CO-NR²³R²⁴;
- R²¹: are independently from each other selected from the group consisting of OH, C₁₋₄ alkyl, phenyl and O-C₁₋₄ alkyl;
- R²³ and R²⁴: are independently from each other selected from the group consisting of H, C₁₋₄ alkyl, phenyl and C₂₋₆ alkyl- NR²³R²⁴.

More preferably,
- M: is a divalent metal atom selected from the group consisting of Cu, Ni and Co, preferably Cu and Ni;
- R¹ and R⁴: are independently from each other selected from the group consisting of H, CN and CO-R²¹;
- R² and R³: are independently from each other selected from the group consisting of H, methyl, ethyl and phenyl;
- R⁵, R⁶, R⁷, R⁸ and R⁹: are independently of from each other selected from the group consisting of H OH, F, Cl Br, CN, NO₂, methyl, ethyl, phenyl, NR²³ R²⁴, methoxy, ethoxy, O-phenyl, SO₂R²¹, SO₂-NR²³R²⁴, COR²¹ and CO-NR²³R²⁴;
- R²¹: are independently from each other selected from the group consisting of OH, methyl, ethyl, phenyl, methoxy and ethoxy;
- R²³ and R²⁴: are independently from each other selected from the group consisting of H, methyl, ethyl, phenyl and C₂₋₃ alkyl- NR²³ R²⁴.

Even more preferably, subject of the invention is the use of a compound of formula (1), (2), (3), (4), (5), (6), (7), (8), (9), (10), (11), (12), (13), (14), (15), (16), (17), (18), (19) or (20) 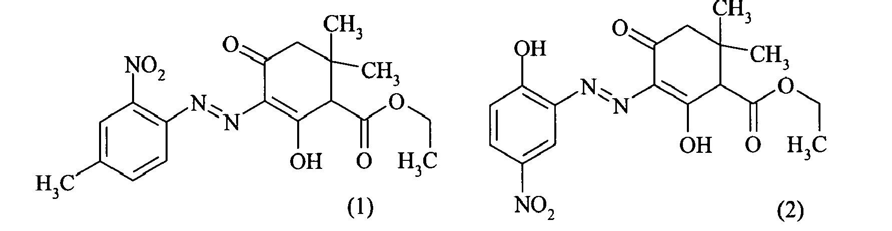 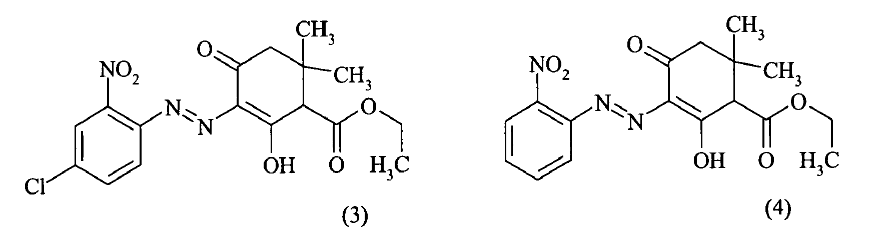 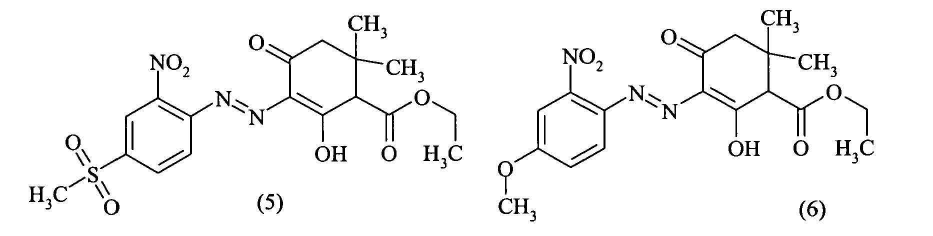 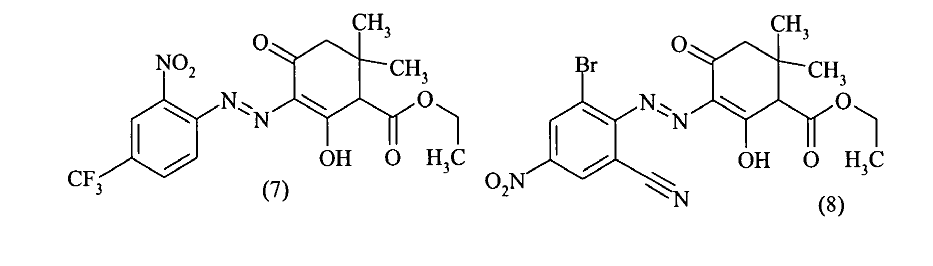 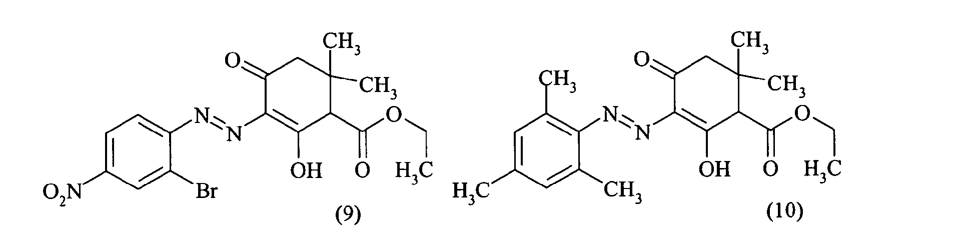 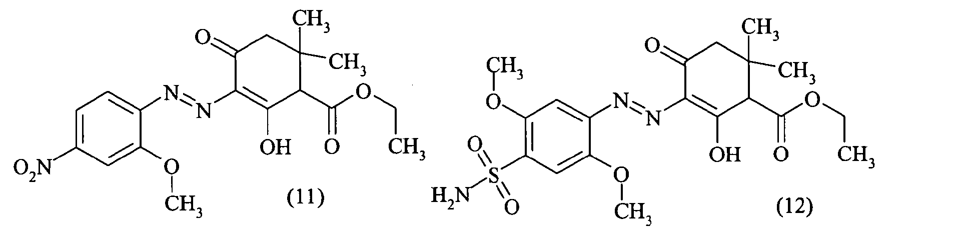 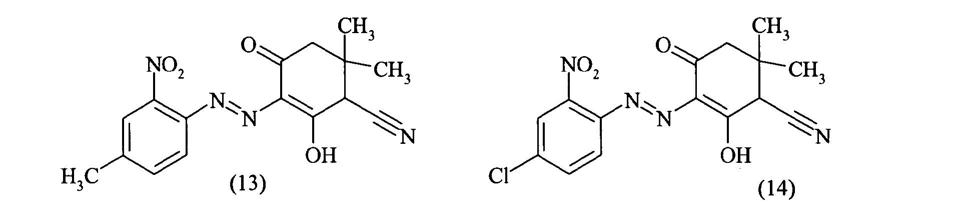 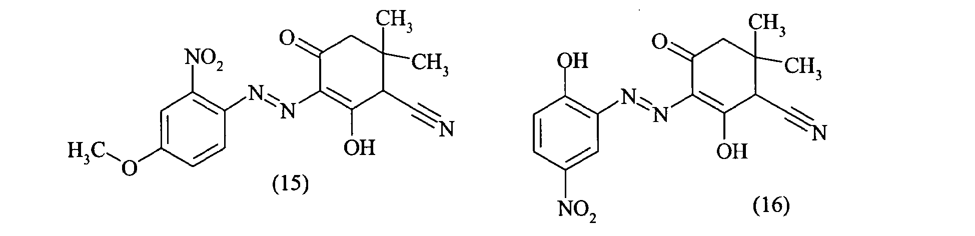 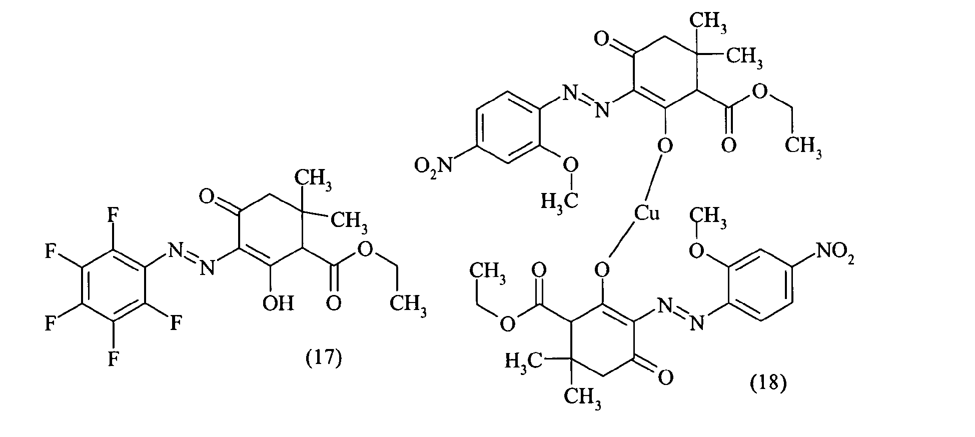 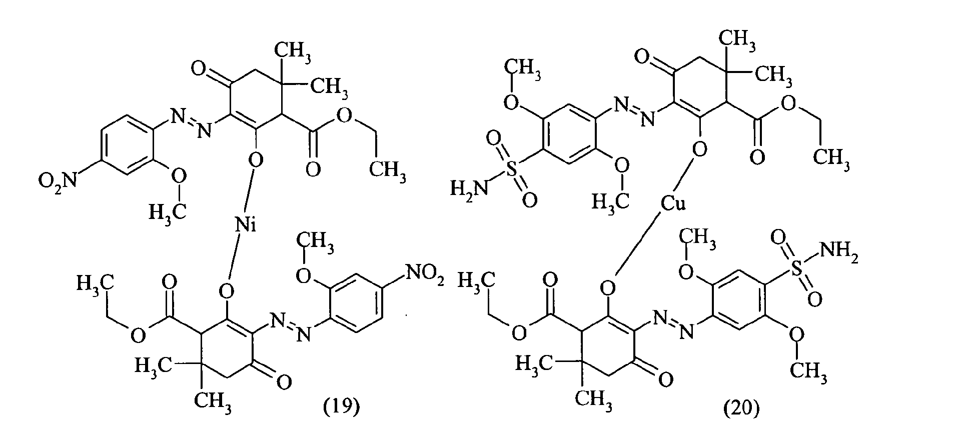 in an optical layer, preferably in an optical layer for optical data recording.

A further subject of the invention is the use of a compound of formula (I), the use of a compound of formula (I) in all the preferred aspects of the formula (I) as described above, and more preferably the use of a compound of formula (1), (2), (3), (4), (5), (6), (7), (8), (9), (10), (11), (12), (13), (14), (15), (16), (17), (18), (19) or (20), as a dye in an optical layer, preferably in an optical layer for optical data recording.

### Preparation of the compounds of formula (I) with A being H

In the following, the compounds of formula (I) with A being H are called azo ligands. The compounds of formula (I) with A being H and the compounds of formula (1), (2), (3), (4), (5), (6), (7), (8), (9), (10), (11), (12), (13), (14), (15), (16) or (17) are preferably prepared by azo coupling reaction of the respective compound of formula (Ia), also called coupling agent, with the respective compound of formula (Ib), also called diazo component; the compound of formula (Ib) being prepared by diazotization reaction of the respective compound of formula (Ic), also called amine compound; 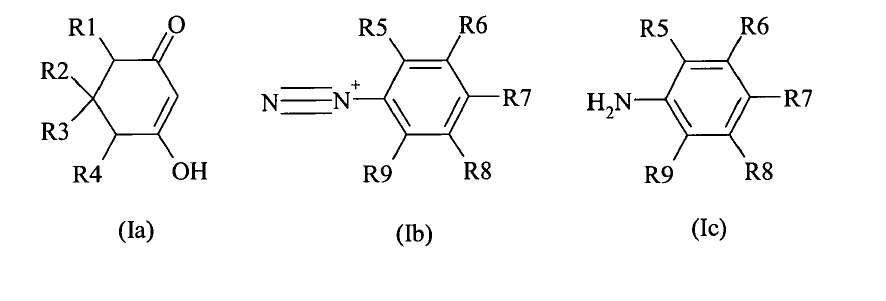 wherein R1 to R9 have the same meaning as described above, also with all their

### preferred embodiments.

The diazo component has preferably Chloride Cl- as counter ion, since the diazotization reaction of the amine compound usually is done in aqueous hydrochloride acid.

The amine compounds and the coupling agents are known substances.

It is possible to use more than one amine component and/or more than one coupling agent resulting in the respective mixture of the azo ligands.

The azo coupling reaction is carried out in water, non-aqueous solvents and in mixtures thereof. Non-aqueous solvents are preferably selected from the group consisting of alcohols, more preferably methanol, ethanol, propanol, butanol, pentanol, dipolar aprotic solvents, preferably DMF, DMSO and NMP, and water-immiscible solvents, preferably toluene or chlorobenzene. More preferably the azo coupling reaction is carried out in water.

The azo coupling reaction is preferably carried out in a stoichiometric ratio of coupling component and diazo component. The azo coupling reaction is generally done at temperatures between -30°C to 100°C, preference being given to temperatures of -10°C to 30°C, and particular preference to temperatures of -5°C to 20°C.

The azo coupling reaction may be carried out in an acidic as well as an alkaline medium. Preference is given to pH < 10, particular preference to pH 3 to 9.

Preferably the azo ligand is isolated following standard methods, in case of a precipitate preferably by filtration, and preferably dried.

### Preparation of the compounds of formula (I) with A being a group of formula (II)

Preferably, the compounds of formula (I) with A being a group of formula (II) are prepared by complexing reaction of one equivalent of a divalent metal salt, preferably selected from main groups 1, 2, 3, 4 or 5 or from transition groups 1 or 2 or 4, 5, 6, 7 or 8 of the Periodic Table of the Chemical Elements, preferably in form of a solution, with two equivalents of a compound of formula (1) with A being H, i.e. of the respective azo ligand; particularly the compounds of formulae (18), (19) and (20) are prepared accordingly using the respective compounds of formulae (11) or (12) and a respective metal salt, the metal salt being selected from one of the Ni or Cu salts described below.

It is possible to use more than one metal salt, preferably a mixture of 2 or 3 metal salts, preferably in the required stoichiometric amounts with regard to the azo ligand.

The azo ligand can be added to the metal salt or vice versa.

The complexing reaction can be carried out in suspension or in solution, preferably in suspension, preferably at elevated temperature, more preferably at the boiling point of the solvent.

The complexing reaction usually results in a precipitate; the precipitate is isolated following standard methods, preferably by filtration.

The solvents that can be used in the complexing reaction are water, solvents and mixtures thereof. The solvents are preferably selected from the group consisting of C₁₋₈ alcohols, nitriles, preferably acetonitrile, ketones, preferably acetone, aromatic solvents, preferably toluene or chlorobenzene, and dipolar aprotic solvents, preferably DMF, DMSO and NMP.

More preferred solvents are C₁₋₈ alcohols, especially ethanol, and acetonitrile.

It is also possible to add the metal salt already at an earlier stage of the synthesis of the azo ligand or their precursors, preferably before, during or after the azo coupling reaction, more preferably after the azo coupling reaction to the resulting suspension or solution of the azo ligand.

Even more preferably the azo ligand is isolated and dried after synthesis, and the complexing reaction is carried out in a separate step.

Preferably the azo ligand is present as a suspension in the complexing reaction.

The complexing reaction is generally done at temperatures between 20°C to 200°C, preferably at temperatures between 50°C to 170°C, particularly preferably at temperatures between 80°C to 150°C, further particularly preferably the complexing reaction is carried out at reflux temperature and at atmospheric pressure.

Preferably the compound of formula (I) with A being a group of formula (II) is isolated following standard methods, usually they form a precipitate which is isolated, preferably by filtration, and dried.

The divalent metal salt is derived from a metal preferably selected from the group consisting of Mg, Ca, Sr, Ba, Mn, Cu, Ni, Co, Zn, and Fe, more preferably of Cu, Ni, and Co. Salts of the divalent metal are preferably sulfates, halides (preferably fluoride, chloride, bromide, iodide, more preferably chloride and bromide, especially chlorides) and acetates and their respective hydrates.

More preferred metal salts are cobalt-, nickel- or copper-sulfate; cobalt-, nickel- or copper- halide, preferably -chloride; cobalt-, nickel- or copper-acetate, and their respective hydrates, especially the metal salt is selected from the group consisting of Cu(SO₄)₂, Cu(SO₄)₂*5 H₂O, CuCl₂, Ni(OAc)₂, Ni(OAc)₂*4 H₂O, NiCl₂*6 H₂O, Co(SO₄)₂ and CoSO₄*7H₂O; preferably from the group consisting of Ni(OAc)₂, Cu(SO₄)₂*5 H₂O, CuCl₂, Co(SO₄)₂ and CoSO₄*7H₂O, more preferably from Ni(OAc)₂, CuCl₂ and Cu(SO₄)₂*5 H₂O.

A further subject of the invention is a process for the preparation of the compounds of formula (I) with A in formula (I) being a group of formula (II), as well as of the compounds of formula (I) with A in formula (I) being a group of formula (II) in all the preferred aspects as described above, particularly of the compounds of formula (18), (19) and (20), by a complexing reaction of a compound of the formula (I) with A in formula (I) being H, i.e. the azo ligand, particularly of a compound of formula (11) or (12), with a divalent metal salt, particularly with a Ni or Cu salt.

A further subject of the invention is a process for the preparation of the compound of formula (I) with A being H, i.e. of the azo ligands, especially of the compounds of formula (1), (2), (3), (4), (5), (6), (7), (8), (9), (10), (11), (12), (13), (14), (15), (16) or (17), particularly of the compounds of formula (11) or (12), preferably being prepared by an azo coupling reaction of the respective diazo component of formula (Ib), and the respective coupling agent of formula (Ia); with the compound of formula (Ib) being prepared from the respective compound of formula (Ic) by a diazotization reaction.

A further subject of the invention is a compound of formula (1), (2), (3), (4), (5), (6), (7), (8), (9), (10), (11), (12), (13), (14), (15), (16), (17), (18), (19) or (20); a further subject of the invention is the use of a compound of formula (1), (2), (3), (4), (5), (6), (7), (8), (9), (10), (11), (12), (13), (14), (15), (16) and (17) as a ligand, preferably as a ligand in azo metal complex dyes.

Further subject of the invention is a composition (C) comprising a component (A) and a component (B), wherein
the component (A) is selected from the group consisting of a compound of formula (I) with A being H;
and
the component (B) is a compound of formula (X); 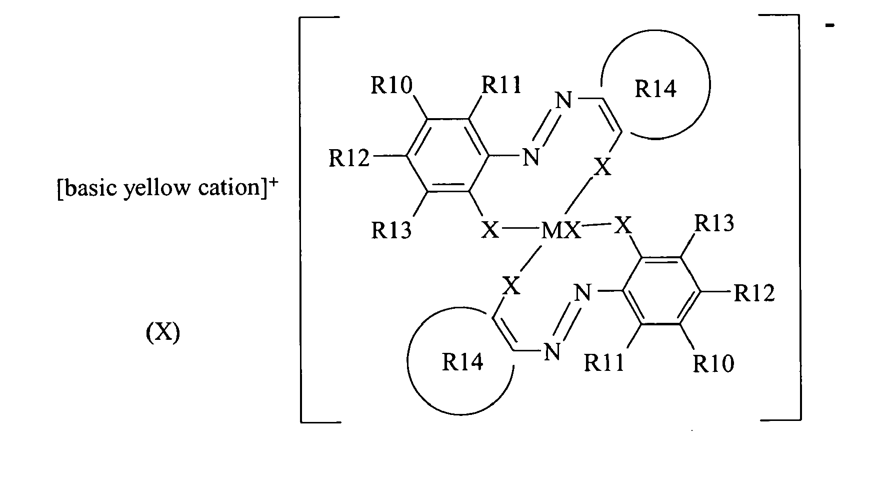 wherein
- MX: is a trivalent metal atom, preferably selected from the group consisting of Co, Cr, Fe and Al;
- R10, R11, R12 and R13: are independently of each other selected from the group consisting of H, OH, halogen, CN, NO₂, C₁₋₁₂ alkyl, C₆₋₁₂ aryl, NR33R34, C₁₋₆ alkyl-NR33R34, O-C₁₋₁₂ alkyl, S-C₁₋₁₂ alkyl, O-C₆₋₁₂ aryl, S-C₆₋₁₂ aryl, SO₂R31, SO₂NR33R34, COR31, CONR33R34, NHCOR31, C₆₋₁₀ heteroaryl, the C₆₋₁₀ heteroaryl residue having with 1, 2 or 3 heteroatoms independently from each other selected from the group consisting of O, N and S;
- R31: represents OH, C₁₋₆ alkyl, C₆₋₁₀ aryl, O-C₁₋₆ alkyl;
- R33 and R34: are independently from each other selected from the group consisting of H, C₁₋₆ alkyl, C₆₋₁₀ aryl and O-C₁₋₆ alkyl;
- R14: forms together with the -C=C- group, to which it is attached, an aromatic or heteroaromatic, five or six membered cycle,
the heteroaromatic cycle having with 1, 2 or 3 heteroatoms independently from each other selected from the group consisting of O, N and S;
the aromatic and the heteroaromatic cycle being unsubstituted or substituted with 1, 2, 3 or 4 substituents independently from each other selected from the group consisting of halogen, C₁₋₁₀ alkyl, =C(CN)2 (dicyanomethylene), CN, COR31, SO₂NR33R34 and NO₂;
- X: represents a deprotonated residue derived from OH, NHR33, CONHR33 or SO₂NHR33;
the basic yellow cation is a cation of a Basic Yellow dye, the expression Basic Yellow as defined in the Color Index: colour index international, fourth edition, © Society of Dyers and Colourists and American Association of Textile Chemists and Colorists 2002, preferably the basic yellow cation is selected from the group of cations consisting of the cations of Basic Yellow 1, Basic Yellow 2, Basic Yellow 11, Basic Yellow 13, Basic Yellow 21, Basic Yellow 24, Basic Yellow 28, Basic Yellow 29, Basic Yellow 37, Basic Yellow 49, Basic Yellow 51, Basic Yellow 57 and Basic Yellow 90.

Preferably,
the component (A) is a compound of formula (I), with A being H, in all the preferred aspects of the formula (I) with A being H as described above; the basic yellow cation is selected from the group of cations consisting of the cations of Basic Yellow 1, Basic Yellow 2, Basic Yellow 11, Basic Yellow 13, Basic Yellow 28 and Basic Yellow 29; 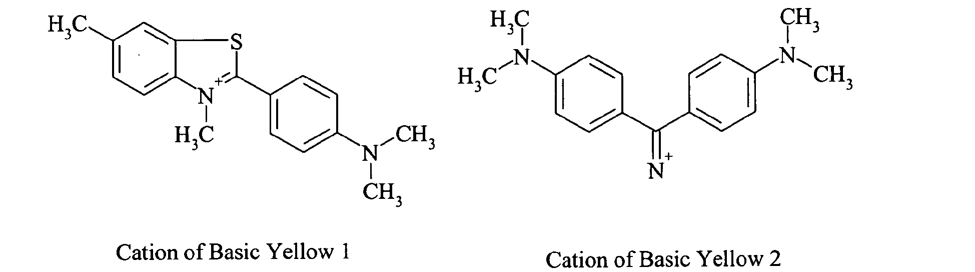 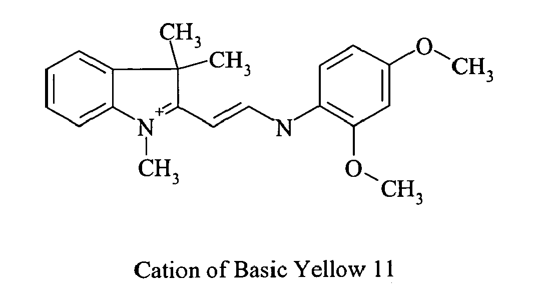 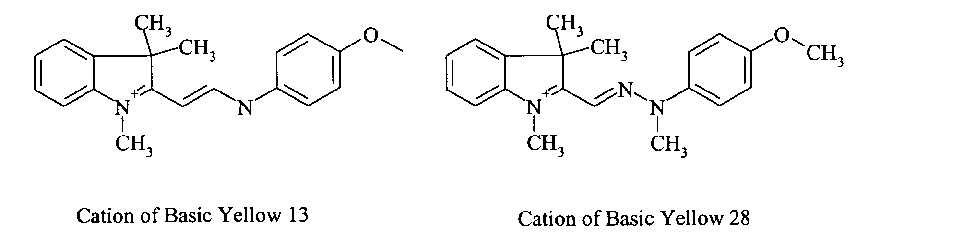 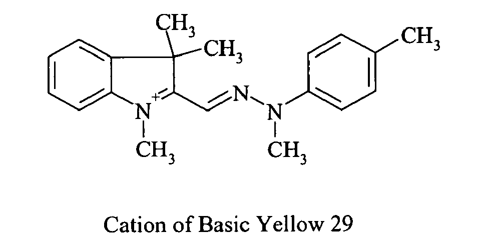
- MX: is Co or Cr;
- X: is O;
- R11 and R13: are H;
- R12: is H or NO₂;
- R10: is selected from the group consisting of H, NO₂ and SO₂NR33R34; more preferably,
eitherR10 is NO₂ or SO₂NR33R34 in case of R12 being H,
or R10 is H in case of R12 being NO₂;
- R33: is H;
- R34: is C₁₋₆ alkyl;
- R14: forms together with the -C=C- group, to which it is attached, a group of formula (a), (b), (c) or (d), preferably of (a), (c) and (d), with the (*) indicating the bond to the X or N in formula (X), and (**) indicating the bond to the X or N in formula (X); 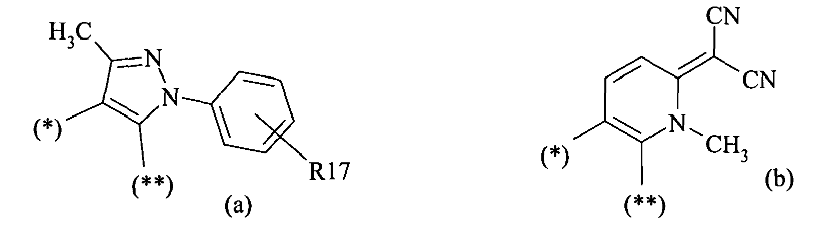 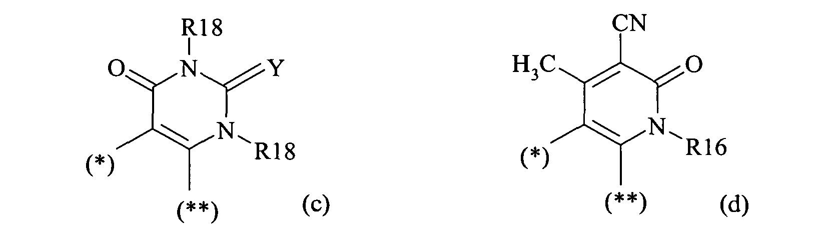
- R16: is C₁₋₄ alkyl or NH-phenyl; preferably R16 is n-butyl;
- R17: is H or Cl; preferably R17 is Cl in para-position;
- Y: isOorS;
- R18: is C₁₋₄ alkyl, preferably methyl or ethyl; more preferably
eitherR18 is methyl in case of Y being O,
or R18 is ethyl in case of Y being S.

More preferably,
the component (A) is a compound of formula (1), (2), (3), (4), (5), (6), (7), (8), (9), (10), (11), (12), (13), (14), (15), (16) or (17);
the component (B) is a compound of formula (XA1), (XA2), (XA11), (XA13), (XA28), (XA29), (XB1), (XB2), (XB 11), (XB13), (XB28), (XB29), (XC 1), (XC2), (XC11), (XC13), (XC28), (XC29), (XD1), (XD2), (XD11), (XD 13), (XD28), (XD29), (XE1), (XE2), (XE11), (XE13), (XE28), (XE29), (XF1), (XF2), (XF11), (XF13), (XF28) or (XF29), these formulae being as defined in table 1 and 2: the compounds of formula (X) consist of an anion and of a cation, preferred anions are the compounds of formulae (XA), (XB), (XC), (XD), (XE) or (XF), preferred cations are the cations of the Basic yellows with the formulae as given above.

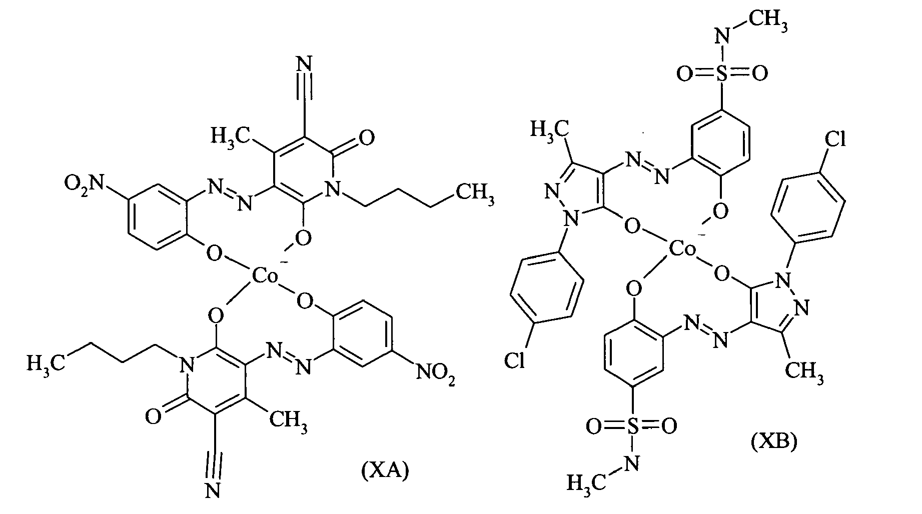

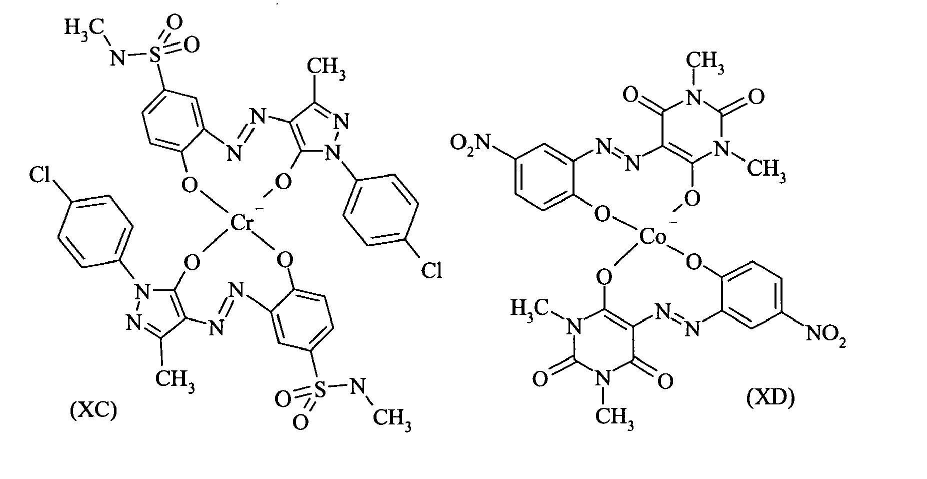

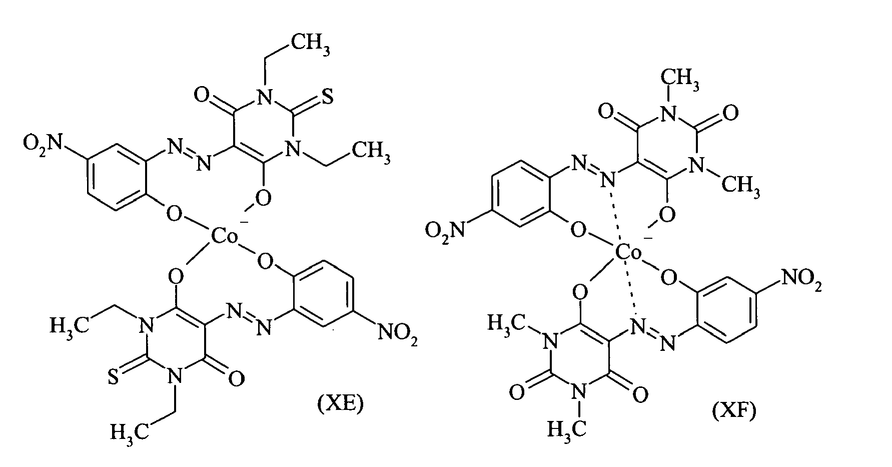

| **Table 1: Compounds of formula (X)** | | | |
|---|---|---|---|
| **Cation** | **Anion** | | |
| **Cation of** | **complexes of formula (XA)** | **complexes of formula (XB)** | **complexes of formula (XC)** |
| **Basic Yellow 1** | (XA1) | (XB1) | (XC1) |
| **Basic Yellow 2** | (XA2) | (XB2) | (XC2) |
| **Basic Yellow 11** | (XA11) | (XB11) | (XC11) |
| **Basic Yellow 13** | (XA13) | (XB13) | (XC13) |
| **Basic Yellow 28** | (XA28) | (XB28) | (XC28) |
| **Basic Yellow 29** | (XA29) | (XB29) | (XC29) |

| **Table 2: Compounds of formula (X)** | | | |
|---|---|---|---|
| **Cation** | **Anion** | | |
| **Cation of** | **complexes of formula (XD)** | **complexes of formula (XE)** | **complexes of formula (XF)** |
| **Basic Yellow 1** | (XD1) | (XE1) | (XF1) |
| **Basic Yellow 2** | (XD2) | (XE2) | (XF2) |
| **Basic Yellow 11** | (XD11) | (XE11) | (XF11) |
| **Basic Yellow 13** | (XD13) | (XE13) | (XF13) |
| **Basic Yellow 28** | (XD28) | (XE28) | (XF28) |
| **Basic Yellow 29** | (XD29) | (XE29) | (XF29) |

Even more preferably,
the component (A) is a compound of formula (1); and
the component (B) is a compound of formula (XA13), (XA28), (XA29), (XB11) or (XD28).

The composition (C) can also comprise as component (A) more than 1, preferably 2, 3 or 4, more preferably 2 or 3, compounds of formula (I) with A being H, and/or as component (B) more than 1, preferably 2, 3 or 4, more preferably 2 or 3, compounds of formula (X).

Preferably, the ratio of the weight of the component (A) to the weight of the component (B) is of from between 0.01 and 0.99 to 0.99 and 0.01, more preferably of from between 0.1 and 0.9 to 0.9 and 0.1, even more preferably of from between 0.2 and 0.8 to 0.8 and 0.2.

Especially preferably the ratio of the weight of the component (A) to the weight of the component (B) is of from between 0.01 and 0.25 to 0.99 and 0.75, more preferably of from between 0.025 and 0.2 to 0.975 and 0.8, even more preferably of from between 0.05 and 0.15 to 0.95 and 0.85.

Preferably, the composition (C) comprises preferably 10 to 100 % by weight, more preferably 25 to 100 % by weight, even more preferably 50 to 100% by weight, especially 75 to 100 % by weight, in particular 90 to 100 % by weight, based on the weight of the total composition (C), of the combined amounts of the component (A) and component (B).

Preferably, the composition (C) consists essentially of the component (A) and (B).

The composition (C) are prepared by physically combining the (individual) components (A) and (B), preferably by blending or mixing, the blending or mixing is preferably done in the solid, molten or dissolved state of the components; preferably the blending or mixing is done by dry blending, by mixing the slurries or the solutions of the components; or the mixing is done by a combination of any of the mentioned measures.

For the dry blending, the component (A) is mixed physically with the component (B) in a mill, in a shaker or in any other mechanical device leading to homogeneous mixture of components (A) and (B).

For the slurry blending, also called wet mixing, the component (A) is mixed physically with the component (B) in a solvent. The solvent is preferably at least one organic solvent, water or a mixture of at least one organic solvent with water.

More preferably, the solvent is selected from the group consisting of alcohols, chlorinated solvents and ketones, even more preferably of methanol, ethanol, propanol, butanol, tetrafluoropropanol, dichloromethane, chloroform, acetone, methyl ethyl ketone and methyl tert-butyl ketone.

To obtain dry blends from the slurry, the solvent is removed by conventional methods known in the art, preferably by filtration or distillation, and the resulting presscake is dried.

In the case that the components are blended in form of their solutions, the components are dissolved in the solvent either individually or in form of a premixture of the components.

A further subject of the invention is therefore a process for the preparation of the composition (C) comprising the components (A) and (B) by physically combining the (individual) components.

A further subject of the invention is the use of the composition (C) comprising the component (A) and the component (B); and the use of the composition (C) comprising the component (A) and the component (B) in all the preferred aspects of the components (A) and (B) as described above, in an optical layer, preferably in an optical layer for optical data recording.

A further subject of the invention is the use of the composition (C) comprising the component (A) and the component (B); and the use of the composition (C) comprising the component (A) and the component (B) in all the preferred aspects of the components (A) and (B) as described above, as a dye in an optical layer, preferably for optical data recording.

A further subject of the invention is an optical layer comprising at least one compound of formula (I), with the compound of formula (I) also in all its described embodiments, particularly at least one compound of formula (1), (2), (3), (4), (5), (6), (7), (8), (9), (10), (11), (12), (13), (14), (15), (16), (17), (18), (19) or (20); and the use of said optical layer for optical data recording media. An optical layer according to the invention may also comprise a mixture of two or more, preferably of two or three, more preferably of two compounds of formula (I). A further subject of the invention therefore is an optical data recording medium comprising an optical layer comprising at least one compound of formula (I).

A further subject of the invention is an optical layer comprising at least one compound of formula (I) with A being H, with the compound of formula (I) with A being H also in all its described embodiments, particularly at least one compound of formula (1), (2), (3), (4), (5), (6), (7), (8), (9), (10), (11), (12), (13), (14), (15), (16) or (17), and at least one compound of formula (X), with the compound of formula (X) also in all its described embodiments; and the use of said optical layer for optical data recording media. An optical layer according to the invention may also comprise two or more, preferably two or three, more preferably two compounds of formula (I) with A being H, and two or more, preferably two or three, more preferably two compounds of formula (X). A further subject of the invention therefore is an optical data recording medium comprising an optical layer comprising at least one compound of formula (I) with A being H and at least one compound of formula (X).

Further, the invention relates to a method for producing optical layers on a substrate comprising the following steps
(a) providing a substrate,
(b) dissolving at least one compound of formula (I), particularly at least one compound of formula (1), (2), (3), (4), (5), (6), (7), (8), (9), (10), (11), (12), (13), (14), (15), (16), (17), (18), (19) or (20), in an organic solvent to form a solution,
(c) coating the solution (b) on the substrate (a),
(d) evaporating the solvent to form an optical layer (also called dye layer or recording layer).

Further, the invention relates to a method for producing optical layers on a substrate comprising the following steps
(a) providing a substrate,
(b) dissolving at least one compound of formula (I) with A being H and at least one compound of formula (X), by
   (b1) dissolving a composition (C) comprising the component (A) and the component (B) in an organic solvent to form a solution, or
   (b2a) dissolving at least one compound of formula (I) with A being H in an organic solvent to form a solution, and
   (b2b) dissolving at least one compound of formula (X) in an organic solvent to form a solution, or
   (b3) dissolving at least one compound of formula (I) with A being H together with at least one compound of formula (X) in an organic solvent to form a solution,
(c) coating the solution or the solutions on the substrate by
   (c1) coating the solution (b1) or the solution (b3) on the substrate (a), or
   (c2) coating the solution (b2a) on the substrate (a), evaporating the solvent, and coating the solution (b2b) on the substrate (a),
(d) evaporating the solvent to form an optical layer (also called dye layer or recording layer).

### (a) Substrate

The substrate, which functions as support for the layers applied thereto, is advantageously semi-transparent (transmittance T> 10%) or preferably transparent (transmittance T>90%). The support can have a thickness of from 0.01 to 10 mm, preferably from 0.1 to 5 mm.

Suitable substrates are, for example, glass, minerals, ceramics and thermosetting or thermoplastic plastics. Preferred supports are glass and homo- or co-polymeric plastics.
Suitable plastics are, for example, thermoplastic polycarbonates, polyamides, polyesters, polyacrylates and polymethacrylates, polyurethanes, polyolefins, polyvinyl chloride, polyvinylidene fluoride, polyimides, thermosetting polyesters and epoxy resins. The most preferred substrates are polycarbonate (PC) or polymethylmethacrylate (PMMA).

The substrate can be in pure form or may also comprise customary additives, for example UV absorbers as light-stabilizers for the optical layer.

The substrate is advantageously transparent over at least a portion of the range from 350 to 500 nm, so that it is permeable to at least 90% of the incident light of the writing or readout wavelength.

### (b) Organic solvents

Organic solvents are selected from C₁₋₈ alcohol, halogen substituted C₁₋₈ alcohols, C₁₋₈ ketone, C₁₋₈ ether, halogen substituted C₁₋₄ alkane, nitriles, preferably acetonitrile, or amides, or mixtures thereof.

Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol, more preferred 2,2,3,3-tetrafluoro-1-propanol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.

Preferred amides are for example dimethylformamide or dimethylacetamide.

### (c) Coating methods

Suitable coating methods are, for example, immersion, pouring, brush-coating, blade-application and spin-coating, as well as vapor-deposition methods carried out under a high vacuum. When pouring methods are used, solutions in organic solvents are generally used. When solvents are employed, care should be taken that the supports used are insensitive to those solvents. The optical layer is preferably applied by spin-coating with a dye solution.

### (d) Optical layer (also called dye layer or recording layer)

The optical layer is preferably arranged between the transparent substrate and the reflecting layer. The thickness of the recording layer is from 10 to 1000 nm, preferably from 30 to 300 nm, more preferably from 70 to 250 nm, especially about 80 nm, for example from 60 to 120 nm.

The optical layer comprises a compound of formula (I), or both the compound of formula (I) with A being H and the compound of formula (X), or a composition (C), preferably in an amount sufficient to have a substantial influence on the refractive index, for example at least 30% by weight of the total weight of the optical layer, more preferably at least 60% by weight, most preferably at least 80% by weight.

Further customary components are stabilizers, for example ¹0₂-, triplet- or luminescence quenchers, melting-point reducers, decomposition accelerators or any other additives that have already been described in optical data recording media. Preferably, stabilizers or fluorescence-quenchers are added if desired.

Stabilizers, ¹0₂-, triplet- or luminescence-quenchers are, for example, metal complexes ofN- or S-containing enolates, phenolates, bisphenolates, thiolates or bisthiolates, hindered phenols and derivatives thereof such as o-hydroxyphenyl-triazoles or -triazines or other UV absorbers, such as hindered amines (TEMPO or HALS, as well as nitroxides or NOR-HALS), and also as cations diimmonium, Paraquat^{™} or Orthoquat salts, such as ^{®}Kayasorb IRG 022, ^{®}Kayasorb IRG 040, optionally also as radical ions, such as N,N,N',N'-tetrakis(4-dibutylaminophenyl)-p-phenylene amine-ammonium hexafluorophosphate, hexafluoroantimonate or perchlorate. The latter are available from Organica (Wolfen/DE); ^{®}Kayasorb brands are available from Nippon Kayaku Co. Ltd. In a preferred aspect, the present invention provides for an optical layer suitable for high-density recording material, e.g. of the WORM disc format, in a laser wavelength range of from 350-450nm, preferably around 405 nm.

### Preparation of the optical data recording medium

A method for producing an optical data recording medium comprising an optical layer according to the invention usually comprises the following additional steps
(e) applying a metal layer (also called reflective layer) onto the optical layer,
(f) applying a second polymer based layer to complete the disk (cover layer or protective layer).

### (e) Reflective layer

The application of the metallic reflective layer is preferably effected by sputtering, vapor-deposition in vacuum or by chemical vapor deposition (CVD). The sputtering technique is especially preferred for the application of the metallic reflective layer.

Reflecting materials suitable for the reflective layer include especially metals, which provide good reflection of the laser radiation, used for recording and playback, for example the metals of Main Groups III, IV and V and of the Sub-groups of the Periodic Table of the Elements. Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt, Ce, Pr, Nd, Pm, Sm, Eu, Gd, Tb, Dy, Ho, Er, Tm, Yb and Lu and alloys thereof are especially suitable. Special preference is given to a reflective layer of aluminum, silver, copper, gold or an alloy thereof, on account of their high reflectivity and ease of production.

### (f) Cover layer (also called protective layer)

Materials suitable for the cover layer include plastics, which are applied in a thin layer to the support or the uppermost layer either directly or with the aid of adhesive layers. The material of the cover layer may for example be the same as the material of the substrate. It is advantageous to select mechanically and thermally stable plastics having good surface properties, which may be modified further.

The plastics may be thermosetting plastics and thermoplastic plastics. Preference is given to radiation-cured (e.g. using UV radiation) protective layers, which are particularly simple and economical to produce. A wide variety of radiation-curable materials are known. Examples of radiation-curable monomers and oligomers are acrylates and methacrylates of diols, triols and tetrols, polyimides of aromatic tetracarboxylic acids and aromatic diamines having C₁-C₄alkyl groups in at least two ortho-positions of the amino groups, and oligomers with dialkylmaleinimidyl groups, e.g. dimethyl maleinimidyl groups.

A high-density optical data recording medium according to the invention therefore preferably is a recordable optical disc comprising: a first substrate, which is a transparent substrate with grooves, a optical layer (recording layer), which is formed on the first substrate surface using the compound of formula (I), or using both the compound of formula (I) with A being H and the compound of formula (X), or using the compositions (C), a reflective layer formed on the optical layer, a second substrate, which is a transparent substrate connected to the reflective layer with an attachment layer.

The optical data recording medium according to the invention is preferably a recordable optical disc of the WORM type. It may be used, for example, as a playable HD-DVD (high density digital versatile disc) or Blu-ray^{®} disc, as storage medium for a computer or as an identification and security card or for the production of diffractive optical elements, for example holograms.

The optical data recording media according to the invention may also have additional layers, for example interference layers. It is also possible to construct optical data recording media having a plurality of (for example two) recording layers. The structure and the use of such materials are known to the person skilled in the art. Preferred, if present, are interference layers that are arranged between the recording layer and the reflecting layer and/or between the recording layer and the substrate and consist of a dielectric material of TiO₂, Si₃N₄, ZnS or silicone resins.

These optical data recording media according to the invention can be produced by processes known in the art.

### Readout methods

The structure of the optical data recording medium according to the invention is governed primarily by the readout method; known function principles include the measurement of the change in the transmission or, preferably, in the reflection, but it is also known to measure, for example, the fluorescence instead of the transmission or reflection.

When the optical data recording medium is structured for a change in reflection, the following structures can be used: transparent support / recording layer (optionally multilayered) / reflective layer and, if expedient, protective layer (not necessarily transparent); or support (not necessarily transparent) / reflective layer / recording layer and, if expedient, transparent protective layer. In the first case, the light is incident from the support side, whereas in the latter case the radiation is incident from the recording layer side or, where applicable, from the protective layer side. In both cases the light detector is located on the same side as the light source. The first-mentioned structure of the recording material to be used according to the invention is generally preferred.

When the optical data recording medium is structured for a change in light transmission, the following different structure comes into consideration: transparent support/ recording layer (optionally multilayered) and, if expedient, transparent protective layer. The light for recording and for readout can be incident either from the support side or from the recording layer side or, where applicable, from the protective layer side, the light detector in this case always being located on the opposite side.

Suitable lasers are those having a wavelength of 350-500 nm, for example commercially available lasers having a wavelength of 405 to 414 nm, especially semi-conductor lasers. The recording is done, for example, point for point, by modulating the laser in accordance with the mark lengths and focusing its radiation onto the recording layer. It is known from the specialist literature that other methods are currently being developed which may also be suitable for use.

The process according to the invention allows the storage of information with great reliability and stability, distinguished by very good mechanical and thermal stability and by high light stability and by sharp boundary zones of the pits. Special advantages include the high contrast, the low jitter and the surprisingly high signal/noise ratio, so that excellent readout is achieved.

The readout of information is carried out according to methods known in the art by registering the change in absorption or reflection using laser radiation.

The invention accordingly relates also to a method for the optical data recording, storage and playback of information, wherein an optical data recording medium according to the invention is used. The recording and the playback advantageously take place in a wavelength range of from 350 to 500 nm.

The compounds of formula (I), and the combination of the compounds of formula (I) with A being H together with the compounds of formula (X), and the compositions (C), provide for particularly preferable properties when used in optical layers for optical data recording media according to the invention. They possess the required optical characteristics, demonstrated when used in the form of a solid film:
- an advantageously homogeneous, amorphous and low-scattering optical layer,
- a high refractive index at the longer wavelength flank of the absorption band, which preferably achieves n values of the refractive index of from 1.0 to 3.0 in the range of from 350 to 500 nm,
- a high sensitivity under laser radiation of high power density and good playback characteristics in the desired spectral range,
- an enhanced photosensitivity and stability (in daylight and under laser radiation of low power density) compared to dyes already known in the art,
- an uniform script width and a high contrast,
- an absorption maximum (λ max) in the preferred range between 390 nm and 470 nm as being preferred for blue laser applications, more precisely from 400 to 460 nm,
- a decomposition point (DP) in the preferred temperature range between 200°C and 300°C, more precisely 230°C to 290°C
- a sufficient heat release (HR)

Recording performance of a compound is related to specific parameters measured on disc like:
- a low simulated bit error rate (SbER)
- a low inner parity error rate (PI error)
- a high reflectivity (R)
- a low laser recording power (Pw: power, or OPC: optimum power control): the lower the better
- good readout stability at different laser reading powers.
- an appropriate partial response signal to noise ratio (PRSNR)

The absorption edge is surprisingly steep even in the solid phase.

The compounds of formula (I), the combination of the compounds of formula (I) with A being H together with the compounds of formula (X), and the compositions (C), also show a narrow decomposition temperature of 200-350°C, fitting with the thermal requirements. Additionally, these compounds show a high solubility in organic solvents, which is ideal for the spin-coating process to manufacture optical layers.

Further surprisingly the compositions (C) or the use of both the compounds of formula (I) with A being H together with the compounds of formula (X) in the optical layer, provide for unexpected better results, when compared with the performance of the individual compounds.

The use of the compositions (C) or of a combination of a compound of formula (I) with A being H together with a compound of formula (X) in an optical layer for optical data recording allows unexpectedly the data recoding at higher speeds than the conventional 1X speed in HD-DVD and Blu-ray-discs.

As a result of the use of the dyes of the invention, the recording media of the invention advantageously have homogeneous, amorphous and low scattering recording layers. Further advantages is the light stability in day light and under laser radiation of 0.4 mW, combined with a high sensitivity under laser radiation of moderate, this means as low as possible, power density (OPC preferably 6.0 mW for 1X speed and preferably 11 mW for 2X speed), the good thermal and storage stability and also, in particular the high power margin and the very low PI error level. Especially in case of recording at higher speed, the OPC required should be as low as possible.

### Examples

### UV-vis

For UV-vis spectra, λ max and ε values of a compound are determined by using an UV-vis spectrophotometer, the compound was dissolved in CH₂Cl₂, DMSO or in tip. The values are obtained by balancing the measurements performed on compound solutions at three different concentrations.

### Thermal Decomposition: Decomposition point (DP) and heat release (HR)

For the determination of DP and HR, the compound is incorporated into a sealed aluminum pan. Analysis conditions are as following: Temperature range from 25 to 400°C, heating rate 10°C/min, nitrogen flow of 50 ml/min. Values are determined by single measurement.

### Partial response signal to noise ratio (PRSNR)

A definition and the measuring techniques of PRSNR are described in a book available from DVD Format Logo Licensing Co., Ltd. for example, Annex H of Version 0.9, PART 1 Physical Specifications, DVD Specifications for High Density Read-Only Disk. The higher the PRSNR the better.

### Simulated bit error rate (SbER)

A definition and the measuring techniques of SbER are described in a book available from DVD Format Logo Licensing Co., Ltd. for example, Annex H of Version 0.9, PART 1 Physical Specifications, DVD Specifications for High Density Read-Only Disk. The lower the SbER the better.

PRSNR and SbER are measured in a state in which information has been recorded in the adjacent tracks.

### Reflectivity (R)

A definition and the measuring techniques for the light reflectivity (R) is described in a book available from DVD Format Logo Licensing Co., Ltd. for example, Annex D of Version 0.9, PART 1 Physical Specifications, DVD Specifications for High Density Read-Only Disk. The higher the R the better.

### Cycle number

The degree of degradation of various parameters, e.g. of the PRSNR and SbER, due to repetitive read out is measured. The higher the cycle number until reaching the minimum specifications the better.

### Solubility

The solubility of a compound was determined in 2,2,3,3 tetrafluoropropanol at 25 °C. The solubilities were differentiated into three groups:
- A: Good solubility (> 20 g / L)
- B: Medium solubility (>= 10 and <= 20 g / L)
- C: Poor solubility (<10 g / L)

### Yield

The yield in [%] of the azo coupling reaction for the preparation of the azo ligands was determined based in the molar input of the amine compound.

### Example 1

A mixture of 15.2 g of 4-Amino-5-nitrotoluene, 100 ml of water and 32.2 g of concentrated hydrochloric acid (34% w/w) was gradually admixed with 21ml of sodium nitrite (33% w/v) at 0°C. After 1 hour of reaction at 0°C, the dark diazotization solution was added drop wise to an alkaline solution of 23.4 g of 2-Hydroxy-6,6-dimethyl-4-oxo-cyclohex-2-enecarboxylic acid ethyl ester while maintaining pH at 7.5 to 9 with sodium hydroxide (30% w/w). The batch was stirred 3 hours and then filtered with suction. The precipitate was washed with water and dried. 35.8 g of the compound of formula (1) were obtained (yield 95.4 %).

### Example 2

A mixture of 23.1 g of 2-amino-4-nitrophenol, 300 ml of water and 48.3 g of concentrated hydrochloric acid (34% w/w) was gradually admixed with 37.3 ml of sodium nitrite (33% w/v) at 0°C. After 1 hour of reaction at 0°C, the dark diazotization solution was added drop wise to an alkaline solution of 35.1 g of 2-Hydroxy-6,6-dimethyl-4-oxo-cyclohex-2-enecarboxylic acid ethyl ester while maintaining pH at 7.5 to 9 with sodium hydroxide (30% w/w). The batch was stirred 3 hours and then filtered with suction. The precipitate was washed with water and dried. 49.5 g of the compound of formula (2) were obtained (yield 87.5 %).

### Example 3

A mixture of 17.3 g of 4-chloro-2-nitroaniline, 170 ml of water and 32.2 g of concentrated hydrochloric acid (34% w/w) was gradually admixed with 24.9 ml of sodium nitrite (33% w/v) at 0°C. After 1 hour of reaction at 0°C, the dark diazotization solution was added drop wise to an alkaline solution of 23.4 g of 2-Hydroxy-6,6-dimethyl-4-oxo-cyclohex-2-enecarboxylic acid ethyl ester while maintaining pH at 7.5 to 9 with sodium hydroxide (30% w/w). The batch was stirred 3 hours and then filtered with suction. The precipitate was washed with water and dried. 37.3 g of the compound of formula (3) were obtained (yield 94.2 %).

### Examples 4 to 17

The preparation according to example 1 was done using the respective coupling agent in a stoichiometric ratio with regard to the respective amine component to yield the compounds of formula (4) to (17).

Table A shows the phys-chem properties of the compounds of formulae (1) to (17).

| **Table A** | | | | | | |
|---|---|---|---|---|---|---|
| **Ex.** | **compound** | **Solubility** | **λ max** | **ε (at λ max)** | **Yield** | **DP** |
| | **of formula** | | **[nm]** | **[L / g * cm]** | **[%]** | **[°C]** |
| **1** | (1) | A | 427 | 63 | 95.4 | 282 |
| **2** | (2) | A | 411 | 52 | 87.5 | 253 |
| **3** | (3) | A | 421 | 52 | 94.2 | 274 |
| **4** | (4) | B | 424 | 52 | 56.0 | 238 |
| **5** | (5) | A | 384 | 19 | 51.0 | 200 |
| **6** | (6) | B | 448 | 56 | 99 | 273 |
| **7** | (7) | A | 399 | 32 | 69.7 | 276 |
| **8** | (8) | B | 396 | 55 | 68.0 | 226 |
| **9** | (9) | A | 400 | 72 | 92.0 | 285 |
| **10** | (10) | A | 413 | 55 | 78.8 | 248 |
| **11** | (11) | A | 432 | 44 | 95 | 288 |
| **12** | (12) | A | 438 | 25 | 93.4 | 279 |
| **13** | (13) | C | 442 | 52 | 84.2 | 270 |
| **14** | (14) | A | 437 | 42 | 82 | 222 |
| **15** | (15) | C | 458 | 50 | 86.0 | 154 |
| **16** | (16) | C | 423 | 17 | 67.5 | 249 |
| **17** | (17) | A | 326 | 29 | 24 | 157 |

### Example 18

6.4 g of compound of formula (1), prepared according to example 1, and 1.2 g of sodium acetate were suspended in 70 ml of ethanol. After 15 minutes stirring at reflux, 1.75 g of anhydrous Copper chloride is added to the mixture. After some minutes, a dark brown suspension results. The mixture is heated at reflux for 6 hours and then cooled down to room temperature. The resulting precipitate is filtered off and the press cake washed with deionized water and dried. 6.3 g of the compound of the formula (18) is obtained.

### Examples 19 and 20

The complexing reaction according to example 18 was repeated with the respective metal salts and with the respective compounds of formula (11) to (12), prepared according to examples 11 and 12, to yield compounds of formulae 19 and 20, the combinations and the details are given in table (B).

| **Table B** | | | | | | | |
|---|---|---|---|---|---|---|---|
| **Ex.** | **compound** | **Metal Salt** | **Solubility** | **λ max** | **ε ( at λ max)** | **Yield** | **DP** |
| | **of formula** | | | **[nm]** | **[l/g.cm]** | **[%]** | **[°C]** |
| **18** | (18) | CuCl2 | C | 431 | 50 | 76.2 | 276 |
| **19** | (19) | Ni(OAc)2 | A | 442 | 67 | 67.8 | 278 |
| **20** | (20) | CuCl2 | B | 441 | 42 | 92.7 | 314 |

### Preparation of the compositions (C)

In the following, "%" means "% by weight", and the amount of a component in a composition (C) is given in % by weight based on the weight of the total composition, if not otherwise stated.

### Example 30: Process of dry blending of powders of the components (DB)

A composition (c30), consisting of 10 % by weight of compound of formula (1) and 90 % by weight of compound of formula (XA13), is prepared by blending the corresponding powders of the components.

### Process of wet mixing of the components (WM)

In case of wet mixing, the solvent has to be carefully selected in order to prevent a complete solubilisation of any component, because this wouldn't result in the desired composition.

### Example 31: Wet mixing (WM)

A compositions (c31), consisting of 10 % by weight of compound of formula (1) and 90 % by weight of compound of formula (XB 11), is prepared by dispersing in ethanol the corresponding corresponding powders of the components. The suspension is stirred for 1 hour at room temperature, cooled down to 10°C. The resulting precipitate is filtered off and the press cake is washed with deionized water and dried.

### Process of Dissolving of the components (DISS)

The solvent has to be carefully selected in order to obtain a complete solubilisation of the mixture components.

### Example 32: Dissolving (DISS)

A composition (c32), consisting of 10 % by weight of compound of formula (1) and 90 % by weight of compound of formula (XD28), is prepared by dissolving completely in dichloromethane the corresponding powders of the components. The solution is stirred for 1 hour at room temperature and evaporated on in vacuum a Rotovap apparatus. The resulting precipitate is further dried in an oven at 60°C for 3 hours.

### Examples 33 to 40

Details about the amounts and the preparation of the examples 30 to 40 are given in table D.

| **Table D** | | | | | | |
|---|---|---|---|---|---|---|
| **Example** | **Composition (C)** | **Process** | **Component (A)** | | **Component (B)** | |
| | | | **formula of the compound of formula (X)** | **%** | **formula of the compound of formula (I) with A being H** | **%** |
| **30** | (c30) | DB | (XA13) | 90 | (1) | 10 |
| **31** | (c31) | WM | (XB11) | 90 | (1) | 10 |
| **32** | (c32) | DISS | (XA28) | 80 | (1) | 20 |
| **33** | (c33) | DISS | (XD28) | 90 | (1) | 10 |
| **34** | (c34) | DB | (XA29) | 90 | (1) | 10 |
| **35** | (c35) | DB | (XB28) | 90 | (1) | 10 |
| **36** | (c36) | DB | (XA28) | 90 | (3) | 10 |
| **37** | (c37) | DB | (XA28) | 90 | (5) | 10 |
| **38** | (c38) | DB | (XA28) | 90 | (6) | 10 |
| **39** | (c39) | DB | (XA28) | 90 | (7) | 10 |
| **40** | (c40) | DISS | (XA28) | 90 | (1) | 10 |

### Process of the simultaneous use of the components (A) and (B) (SIM)

The individual components (A) and (B) are used according to application example 4, resulting in an optical layer, which comprises both components.

### Application Example 1

The optical and thermal properties of the compounds of formula (I) and of the compositions (C) were studied. The compounds of formula (I) and of the compositions (C) show high absorption at the desired wavelengths. In addition, the shapes of the absorption spectra, that still remain critical to the disc reflectivity and formation of clean mark edges, are composed of one major band, comprised in a range of from 350 to 500 nm.

More precisely, n values of the refractive index were evaluated between 1.0 and 2.7. Light stabilities were found comparable to commercial dyes which are already stabilized with quenchers for the use in optical data recording.

Sharp threshold of thermal decomposition within the required temperature range characterizes the compounds of formula (I) and of the compositions (C), which are desirable for the application in optical layers for optical data recording.

### Application Example 2, 3 and 4 - Optical layer and optical data recording medium

1.4% by weight, based on the weight of the solvent, of the compound of formula (1), prepared according to example 1 (application example 2), or of the composition (c30), prepared according to example 30 (application example 3), or 0.14 % by weight of the compound of formula (1), prepared according to example 1, and 1.26 % by weight of the compound of formula (XA28) (application example 4, SIM) are dissolved in 2,2',3,3'-tetrafluoro-1-propanol and the solution is filtered through a Teflon filter of pore size 0.2 µm and applied by spin-coating at 1000 rpm to the surface of a 0.6 mm thick, grooved polycarbonate disc of 120 mm diameter. The excess solution is spun off by increasing the rotational speed. On evaporation of the solvent, the dye remains behind in the form of a uniform, amorphous solid layer, the optical layer. After drying the optical layer in a circulating-air oven at 70°C (10 min) in a vacuum coating apparatus, a 100 µm thick silver layer is then applied to the recording layer by atomization. Then a 6 µm thick protective layer of a UV curable photopolymer (650-020, DSM) is applied thereto by means of spincoating. Finally, a second substrate is provided to combine with the resin protection layer using an attachment layer. This completes the manufacturing of a high-density recordable optical disc, the optical data recording medium.

Evaluation tests are performed using an optical disk evaluation device available from Pulse Tech Co., Ltd.

The testing conditions are the following ones:
- Numerical aperture (NA) of the optical head: 0.65
- Wavelength of a laser light for recording and reproduction: 405 nm
- Constant linear velocity (CLV): 6.61 m/sec.
- Track pitch: 400 nm
- Wobble amplitude of the groove track: 14 nm
- Groove depth: 90 nm.

### Comparative example 1

Application example 2 was carried out using a compound of formula (XA28) instead of the compound of formula (1).

### Comparative example 2 and 3

Application example 2 was carried out using the respective compound of formula (X) instead of the compound of formula (1), as detailed in table (C).

Results of the testing according to application examples 2 and 3 with various compounds and compositions are summarized in the table (C) ("Ex." means example, "Comp.Ex." means comparative example).

| **Table (C)** | | | | | | |
|---|---|---|---|---|---|---|
| | | | | | | |
| **Ex.** | **composition (C)** | **Pw(mW)** | **SbER** | **PRSNR** | **modulation** | **reflectivity** |
| **32** | (c32) | 6.50 | 8.10E-08 | 24.10 | 0.56 | 17.35 |
| **33** | (c33) | 7.2 | 8.2E-08 | 21.4 | 0.55 | 20.30 |
| **34** | (c34) | 6.70 | 1.80E-07 | 28.1 | 0.52 | 19.6 |
| **36** | (c36) | 7.3 | 5.20E-08 | 28.6 | 0.49 | 22.72 |
| **37** | (c37) | 7.3 | 2.00E-07 | 24 | 0.51 | 19.04 |
| **38** | (c38) | 8.2 | 6.90E-06 | 19.1 | 0.40 | 20.18 |
| **39** | (c39) | 8.4 | 1.00E-05 | 17.4 | 0.40 | 20.18 |
| **40** | (c40) | 7.1 | 7.50E-08 | 26.1 | 0.49 | 21.36 |

| | | | | | | |
|---|---|---|---|---|---|---|
| **Comp. Ex.** | **compound of formula** | **Pw(mW)** | **SbER** | **PRSNR** | **modulation** | **reflectivity** |
| **1** | (XA28) | 8 | 3.20E-06 | 22.3 | 0.49 | 19.40 |
| **2** | (XD28) | 8.6 | 7.20E-06 | 17.4 | 0.54 | 14.30 |
| **3** | (XA29) | 7.9 | 1.20E-07 | 29.3 | 0.56 | 20.50 |

A test for evaluating a degree of degradation due to repetition reproduction is conducted for each of the write-once optical disks made for the described recording layers. Readings are carried out at a reading laser power of 0.4 mW and the degrees of degradation of PRSNR and SbER are then measured. Maximum cycle number was found within the specifications, with some examples even up to 1 200 000 cycles.

## Claims

1. Use of a compound of formula (I), 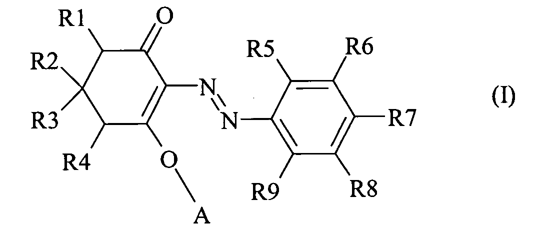 wherein
A represents H or a group of formula (II); 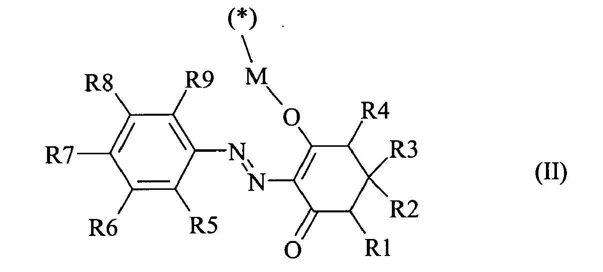
M represents a divalent metal atom;
(*) in formula (II) denotes the bond of the divalent metal atom M to the O atom in formula (I);
R¹ and R⁴ are independently from each other selected from the group consisting of H, CN, CF₃, NO₂, SO₂-NR²³R²⁴ CO-R²¹, SO₂R²¹, CO-NR²³R²⁴;
R² and R³ are independently from each other selected from the group consisting of H, C₁₋₁₀ alkyl, C₅₋₁₀ cycloalkyl and phenyl, the phenyl residue being unsubstituted or substituted by 1 to 4 substituents, the substituents being independently from each other selected from the group consisting of OH, halogen, CN, CF₃, NO₂, C₁₋₁₀ alkyl, C₅₋₁₀ cycloalkyl and C₁₋₁₀ alkoxy;
R⁵, R⁶, R⁷, R⁸ and R⁹ are independently of from each other selected from the group consisting of H, OH, halogen, CN, NO₂, C₁₋₁₂ alkyl, C₆₋₁₀ aryl, NR²³R²⁴,
C₆₋₁₀heteroaryl, the C₆₋₁₀heteroaryl residue having with 1, 2 or 3 heteroatoms independently from each other selected from the group consisting of O, N and S,
O-C₁₋₁₂ alkyl, S-C₁₋₁₂ alkyl, O-C₁₋₁₂ aryl, S-C₁₋₁₂ 2 aryl, SO₂R²¹ , SO₂-NR²³R²⁴, COR²¹, CO-NR²³R²⁴ and NHCOR²¹.
R²¹ are independently from each other selected from the group consisting of OH, C₁₋₆ alkyl, C₆₋₁₀ aryl and O-C₁₋₆ alkyl;
R²³ and R²⁴ are independently from each other selected from the group consisting of H, C₁₋₆ alkyl, C₆₋₁₀ aryl and C₁₋₁₂ alkyl- NR²³R²⁴;
with the proviso, that in case one or both of the ortho residues R5 and R9 is, or are independently from each other, O-C₁₋₁₂ alkyl and/or O-C₁₋₁₂ aryl, the para residue R7 is not simultaneously O-C₁₋₂ alkyl and/or O-C₁₋₁₂ aryl, and vice versa; in an optical layer.

2. Use of a compound of formula (I) according to claim 1, wherein
M is a divalent metal atom selected from the group consisting of Mg, Ca, Sr, Ba, Mn, Cu, Ni, Co, Zn and Fe
R¹ and R⁴ are independently from each other selected from the group consisting of H, CN, CF₃ and CO-R²¹;
R² and R³ are independently from each other selected from the group consisting of H, C₁₋₄ alkyl and phenyl;
R⁵, R⁶, R⁷, R⁸ and R⁹ are independently of from each other selected from the group consisting of H, OH, F, Cl, Br, CN, NO₂, C₁₋₄ alkyl, phenyl, NR²³R²⁴, O-C₁₋₄ alkyl, O-phenyl, SO₂R²¹, SO-NR²³R²⁴ COR²¹ and CO-NR²³R²⁴.
R²¹ are independently from each other selected from the group consisting of OH, C₁₋₄ alkyl, phenyl and O-C₁₋₄ alkyl;
R²³ and R²⁴ are independently from each other selected from the group consisting of H, C₁₋₄ alkyl, phenyl and C₂₋₆ alkyl- NR²³R²⁴.

3. Use of a compound of formula (I) according to claim 1 or 2, in an optical layer for optical data recording.

4. Use of a compound of formula (I) according to one or more of claim 1 to 3, as a dye in an optical layer for optical data recording.

5. An optical layer comprising at least one compound of formula (I) as defined in claim 1 or 2.

6. A method for producing an optical layer as defined in claim 5, comprising the following steps
(a) providing a substrate,
(b) dissolving at least one compound of formula (I), as defined in claim 1 or 2, in an organic solvent to form a solution,
(c) coating the solution (b) on the substrate (a),
(d) evaporating the solvent to form an optical layer.

7. A compound of formula (1), (2), (3), (4), (5), (6), (7), (8), (9), (10), (11), (12), (13), (14), (15), (16), (17), (18), (19) or (20).

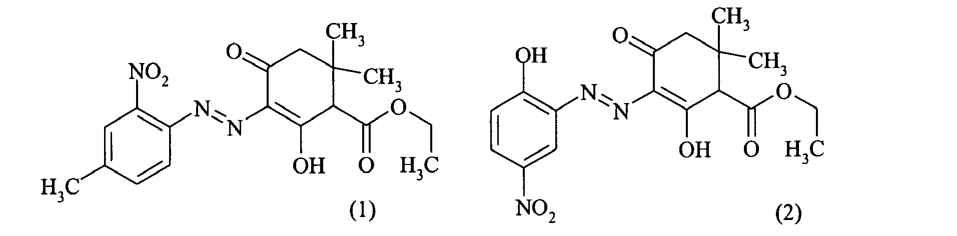

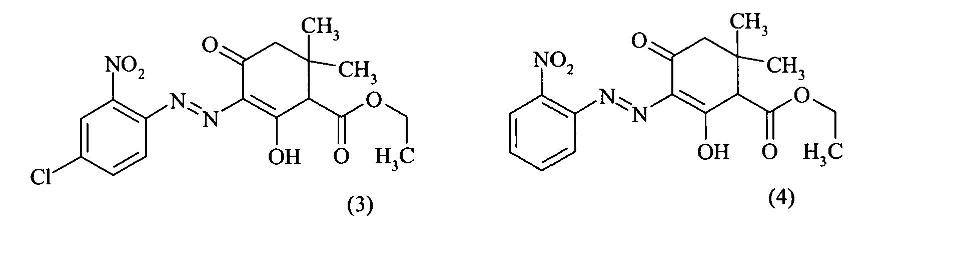

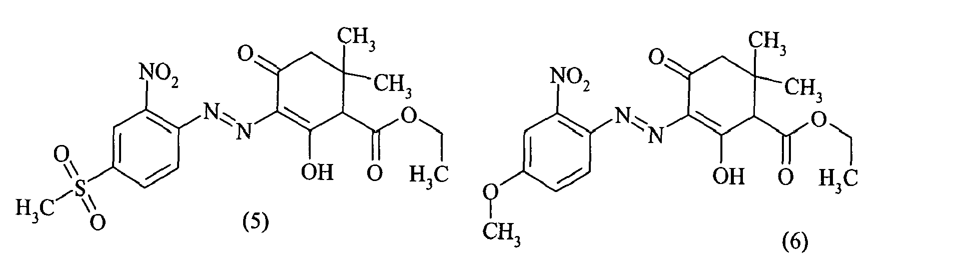

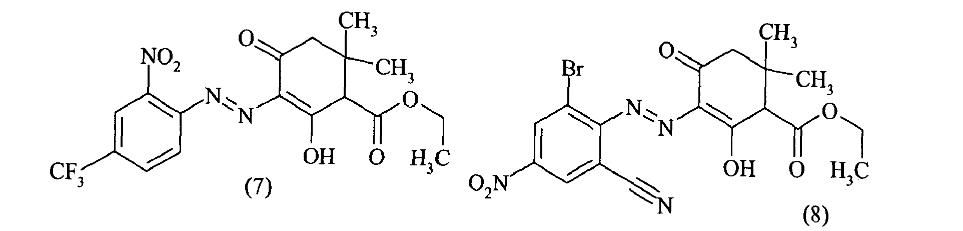

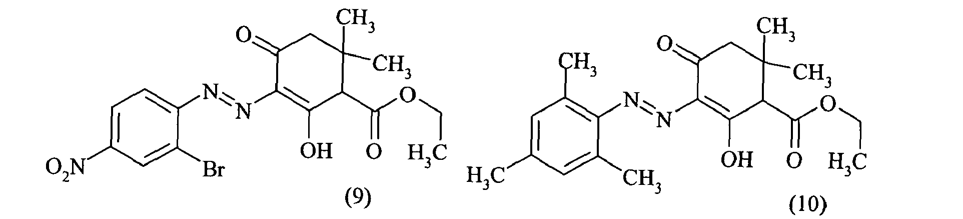

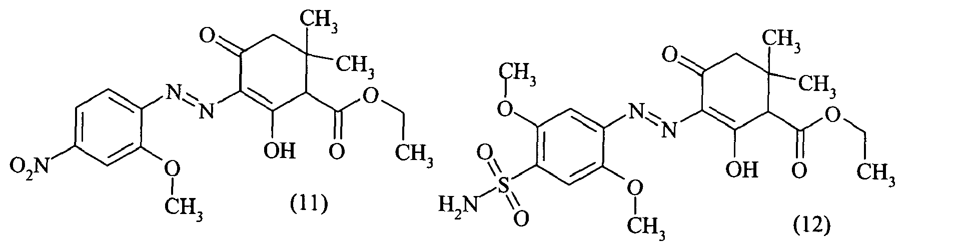

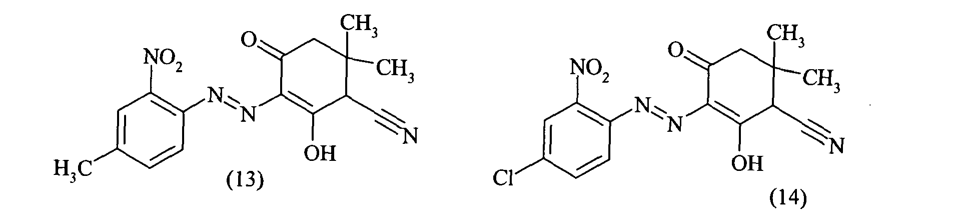

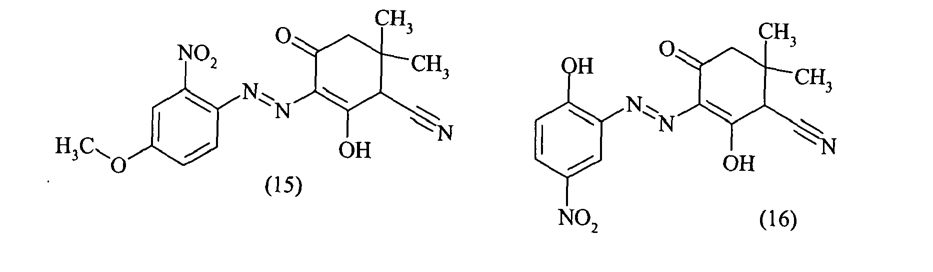

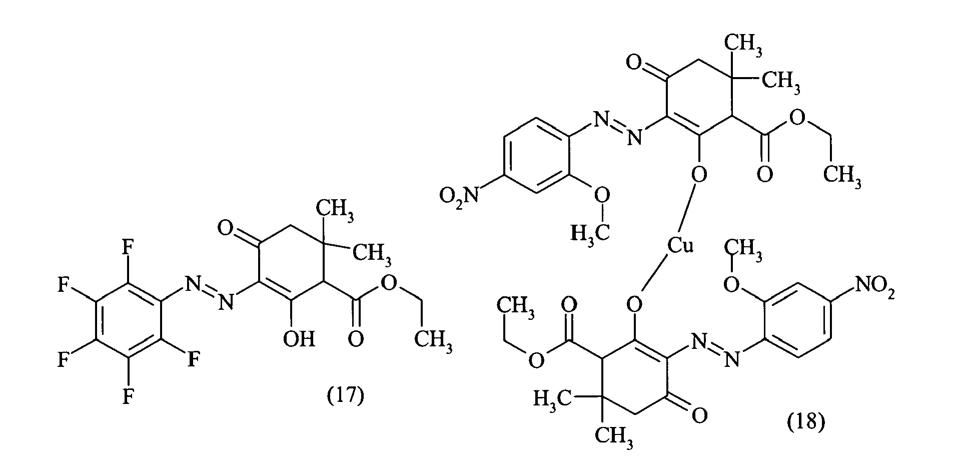

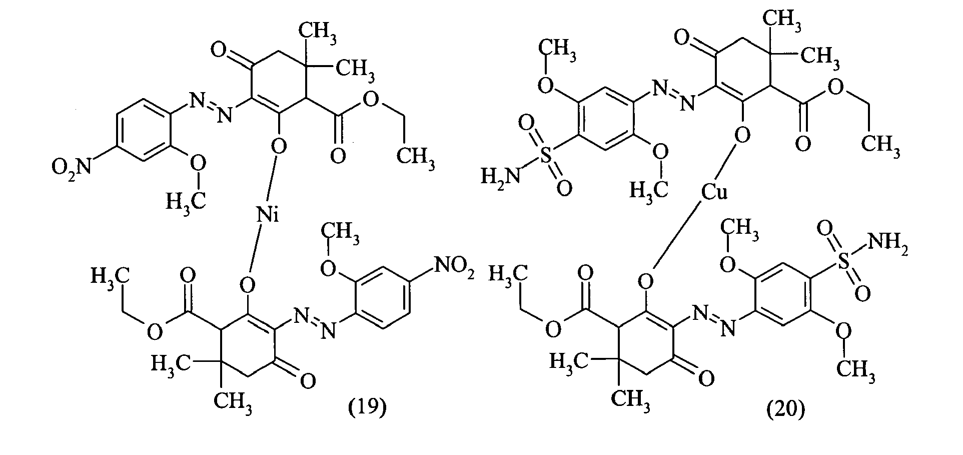

8. A process for the preparation of the compound of formula (1), (2), (3), (4), (5), (6), (7), (8), (9), (10), (11), (12), (13), (14), (15), (16) or (17), as defined in claim 7, **characterized by** being an azo coupling reaction of the respective diazo component and coupling agent.

9. A process for the preparation of the compound of formula (18) or (19), as defined in claim 7, **characterized by** being a complexing reaction of a compound of the formula (11) with a Ni or Cu salt.

10. A process for the preparation of the compound of formula (20), as defined in claim 7, **characterized by** being a complexing reaction of a compound of the formula (12) with a Cu salt.

11. Use of a compound of formula (1), (2), (3), (4), (5), (6), (7), (8), (9), (10), (11), (12), (13), (14), (15), (16) and (17), as defined in claim 7, as a ligand in azo metal complex dyes.

12. A composition (C) comprising a component (A) and a component (B), wherein the component (A) is selected from the group consisting of a compound of formula (I) with A being H as defined in claims 1 or 2; and
the component (B) is a compound of formula (X); 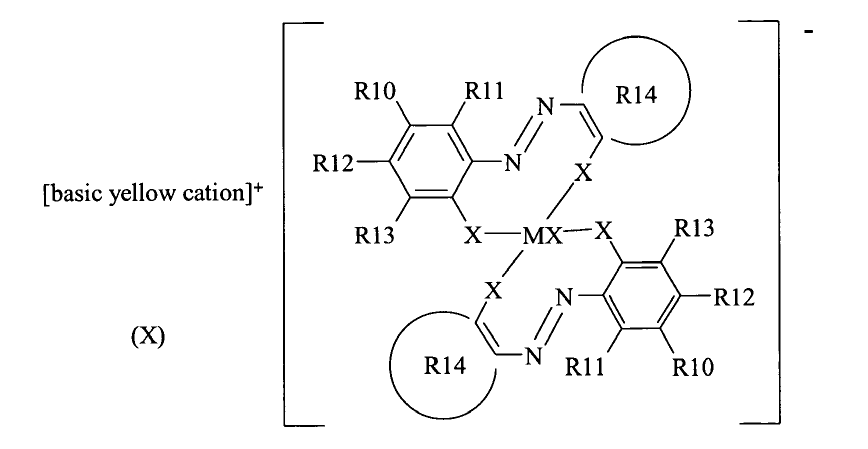 wherein
MX is a trivalent metal atom, preferably selected from the group consisting of Co, Cr, Fe and Al;
R10, R11, R12 and R13 are independently of each other selected from the group consisting of H, OH, halogen, CN, NO₂, C₁₋₁₂ alkyl, C₆₋₁₂ aryl, NR33R34, C₁₋₆ alkyl-NR33R34, O-C₁₋₁₂ alkyl, S-C₁₋₁₂ alkyl, O-C₆₋₁₂ aryl, S-C₆₋₁₂ aryl, SO₂R31, SO₂NR33R34, COR31, CONR33R34, NHCOR31, C₆₋₁₀heteroaryl, the C₆₋₁₀ heteroaryl residue having with 1, 2 or 3 heteroatoms independently from each other selected from the group consisting of O, N and S;
R31 represents OH, C₁₋₆ alkyl, C₆₋₁₀ aryl, O-C₁₋₆ alkyl;
R33 and R34 are independently from each other selected from the group consisting of H, C₁₋₆ alkyl, C₆₋₁₀ aryl and O-C₁₋₆ alkyl;
R14 forms together with the -C=C- group, to which it is attached, an aromatic or heteroaromatic, five or six membered cycle,
the heteroaromatic cycle having with 1, 2 or 3 heteroatoms independently from each other selected from the group consisting of O, N and S;
the aromatic and the heteroaromatic cycle being unsubstituted or substituted with 1, 2, 3 or 4 substituents independently from each other selected from the group consisting of halogen, C₁₋₁₀ alkyl, =C(CN)2 (dicyanomethylene), CN, COR31, SO₂NR33R34 and NO₂;
X represents a deprotonated residue derived from OH, NHR33, CONHR33 or SO₂NHR33;
the basic yellow cation is a cation of a Basic Yellow dye.

13. A composition (C) according to claim 12, wherein
the basic yellow cation is selected from the group of cations consisting of the cations of Basic Yellow 1, Basic Yellow 2, Basic Yellow 11, Basic Yellow 13, Basic Yellow 28 and Basic Yellow 29; 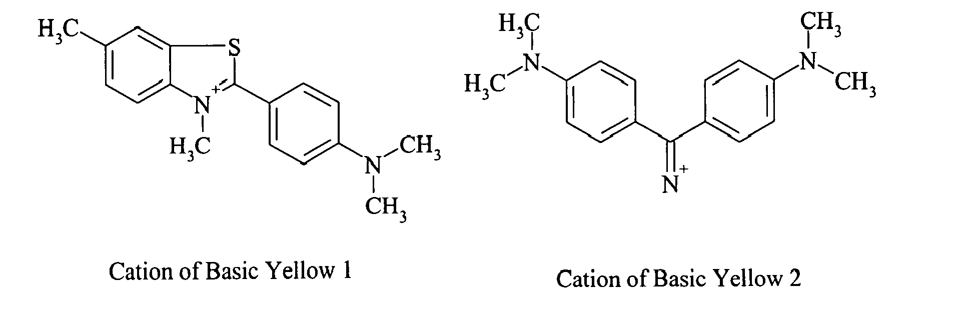 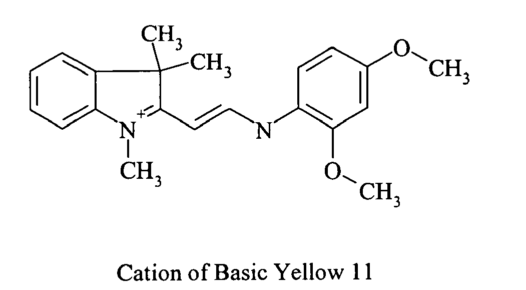 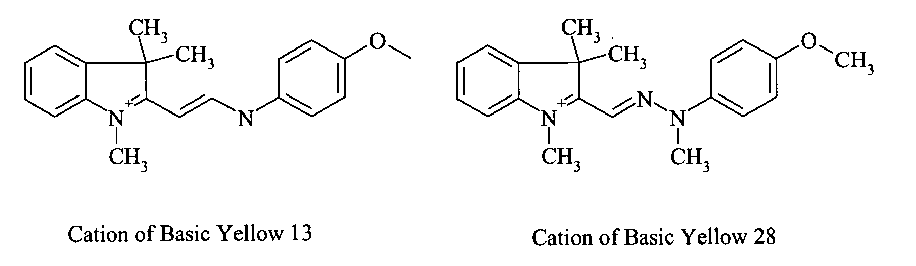 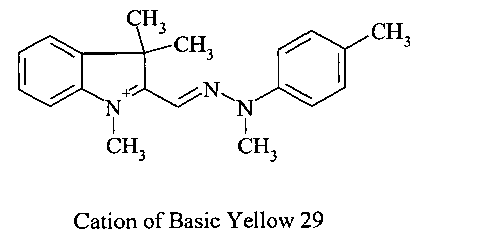
MX is Co or Cr;
X is O;
R11 and R13 are H;
R12 is H or NO₂;
R10 is selected from the group consisting of H, NO₂ and SO₂NR33R34
R33 is H;
R34 is C₁₋₆ alkyl;
R14 forms together with the -C=C- group, to which they are attached, a group of formula (a), (b), (c) or (d), with the (*) indicating the bond to the X or N in formula (X), and (**) indicating the bond to the X or N in formula (X); 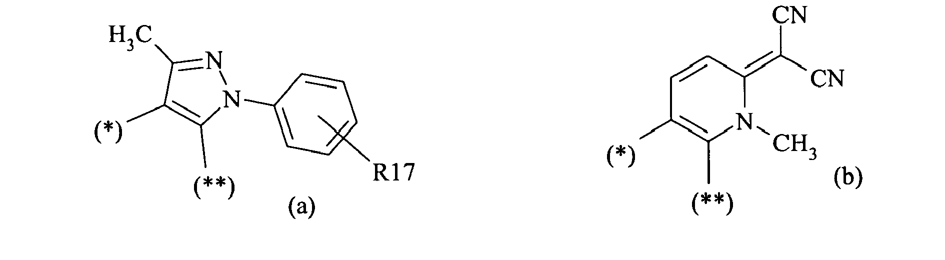 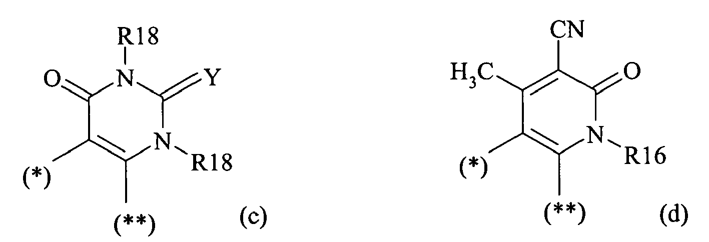
R16 is C₁₋₄ alkyl or NH-phenyl;
R17 is H or Cl;
Y isOorS;
R18 is C₁₋₄ alkyl.

14. A composition (C) according to claim 12 or 13, wherein the ratio of the weight of the component (A) to the weight of the component (B) is of from between 0.01 and 0.99 to 0.99 and 0.01.

15. A process for the preparation of a composition (C) as defined in one or more of the claims 12 to 14 by physically combining the components (A) and (B).

16. Use of a compound of formula (1), (2), (3), (4), (5), (6), (7), (8), (9), (10), (11), (12), (13), (14), (15), (16), (17), (18), (19) or (20), as defined in claim 7, or of a composition (C) as defined in one or more of the claims 12 to 14, in an optical layer for optical data recording.

17. Use according to claim 16, of a compound of formula (1), (2), (3), (4), (5), (6), (7), (8), (9), (10), (11), (12), (13), (14), (15), (16), (17), (18), (19) or (20), or of a composition (C), as a dye in an optical layer for optical data recording.

18. An optical layer comprising at least one compound of formula (I) with A being H as defined in claim 1 or 2, and at least one compound of formula (X) as defined in one or more of the claims 12 to 14.

19. A method for producing an optical layer as defined in claim 18, comprising the following steps
(a) providing a substrate,
(b) dissolving at least one compound of formula (I) with A being H as defined in claim 1 or 2, and at least one compound of formula (X) as defined in claim 12 or 13, by
(b1) dissolving a composition (C) as defined in one or more of the claim 12 to 14 in an organic solvent to form a solution, or
(b2a) dissolving at least one compound of formula (I) with A being H as defined in claim 1 or 2 in an organic solvent to form a solution, and
(b2b) dissolving at least one compound of formula (X) as defined in claim 12 or 13 in an organic solvent to form a solution, or
(b3) dissolving at least one compound of formula (I) with A being H as defined in claim 1 or 2 together with at least one compound of formula (X) as defined in claim 12 or 13 in an organic solvent to form a solution,
(c) coating the solution or the solutions on the substrate by
(c1) coating the solution (b1) or the solution (b3) on the substrate (a), or
(c2) coating the solution (b2a) on the substrate (a), evaporating the solvent, and coating the solution (b2b) on the substrate (a),
(d) evaporating the solvent to form an optical layer (also called dye layer or recording layer).

20. A method according to claim 6 or 19, wherein the substrate is polycarbonate (PC) or polymethylmethacrylate (PMMA).

21. A method according to claim 6 or 19 or 20, wherein the organic solvent is selected from C₁₋₈ alcohol, halogen substituted C₁₋₈ alcohols, C₁₋₈ ketone, C₁₋₈ ether, halogen substituted C₁₋₄ alkane, or amides.

22. An optical data recording medium comprising an optical layer as defined in claim 5 or 18.
